(19) Europäisches Patentamt
European Patent Office
Office européen des brevets

(11) EP 4 692 424 A1

(12) EUROPEAN PATENT APPLICATION
published in accordance with Art. 153(4) EPC

(43) Date of publication:
**11.02.2026 Bulletin 2026/07**

(21) Application number: **24780694.6**

(22) Date of filing: **28.03.2024**

(51) International Patent Classification (IPC):
***C25B 9/00*** (2021.01) ***C25B 1/042*** (2021.01)
***C25B 9/60*** (2021.01) ***C25B 13/04*** (2021.01)
***C25B 13/07*** (2021.01) ***C25B 15/08*** (2006.01)
***C25B 15/021*** (2021.01)

(52) Cooperative Patent Classification (CPC):
**C25B 1/042; C25B 9/00; C25B 9/60; C25B 13/04; C25B 13/07; C25B 15/021; C25B 15/08;**
Y02E 60/36

(86) International application number:
**PCT/JP2024/012768**

(87) International publication number:
**WO 2024/204595 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023054506**

(71) Applicants:
- **Kyushu University, National University Corporation
Nishi-ku
Fukuoka-shi
Fukuoka 819-0395 (JP)**
- **DLR Deutsches Zentrum für Luft- und Raumfahrt e.V.
51147 Köln (DE)**

(72) Inventors:
- **MATSUMOTO, Hiroshige
Fukuoka-shi, Fukuoka 819-0395 (JP)**
- **SATA, Noriko
74321 Bietigheim-Bissingen (DE)**
- **COSTA, Remi
70182 Stuttgart (DE)**
- **ROEDER, Timo
66450 Bexbach (DE)**
- **MONNERIE Nathalie
53721 Siegburg (DE)**
- **KISHIMOTO, Haruo
Tsukuba-shi, Ibaraki 305-8560 (JP)**
- **BAGARINAO, Develos Katherine
Tsukuba-shi, Ibaraki 305-8560 (JP)**
- **TANAKA, Yohei
Tsukuba-shi, Ibaraki 305-8560 (JP)**

(74) Representative: **dompatent
Partnerschaft von
Patentanwälten und Rechtsanwälten mbB
Deichmannhaus am Dom
Bahnhofsvorplatz 1
50667 Köln (DE)**

# (54) STEAM ELECTROLYSIS DEVICE AND STEAM ELECTROLYSIS METHOD

(57) It is an object of the present invention to provide a steam electrolysis device and a steam electrolysis method, which have high energy efficiency. The present invention relates to: a steam electrolysis device, comprising an anode electrode chamber, a cathode electrode chamber, and an ion conductor disposed between these electrode chambers, wherein steam in an amount more than twice the amount of hydrogen generated is supplied to at least one selected from the anode electrode chamber and the cathode electrode chamber, and 50% or less of the supplied steam is electrolyzed; and a steam electrolysis method using the steam electrolysis device.



Processed by Luminess, 75001 PARIS (FR)

## Description

### Technical Field

The present invention relates to a steam electrolysis device and a steam electrolysis method.

### Background Art

Hydrogen production methods can be broadly divided into methods that use fossil fuel such as natural gas as primary energy, and other methods. In Japan, most hydrogen is produced by the steam reforming of natural gas. In addition, hydrogen is also produced as a by-product in the production of coke in petrochemistry and steelmaking and in salt electrolysis. Production of hydrogen by these methods is attended with generation of carbon dioxide. In the future, in order to utilize hydrogen as a fuel for fuel cell vehicles and thermal power generation, and also in order to expand utilization of hydrogen as energy, it will become an important factor that generation of carbon dioxide does not occur upon the production of hydrogen. If renewable energy sources such as solar, wind, and biomass could be used as primary energy sources, generation of carbon dioxide could be suppressed. Therefore, it has been desired to develop a technique of producing hydrogen by utilizing renewable energy.

Water electrolysis (electrolyzation) is a method of decomposing water into hydrogen and oxygen using electrical energy. By using renewable energy as primary energy, the water electrolysis (electrolysis) is a hydrogen production technique that does not generate carbon dioxide. Such hydrogen production techniques are classified into several methods, depending on the operating temperature and the type of an electrolyte used. Alkaline water electrolysis mainly uses a concentrated KOH aqueous solution as an electrolyte and operates at normal pressure and at a temperature from room temperature to about 90°C. Solid polymer water electrolysis uses, as an electrolyte, a perfluorosulfonic acid-based proton-conductive solid polymer membrane such as Nafion as a typical example, and operates at 60°C to 120°C (Non-Patent Document 1). On the other hand, steam electrolysis operates at a high temperature using a solid electrolyte. For example, Patent Documents 1 to 4 disclose a steam electrolysis device and a steam electrolysis method, in which steam is electrolyzed by supplying steam to both the anode and the cathode.

Specifically, Patent Document 1 discloses a steam electrolysis device that generates hydrogen by electrolyzing steam using an electrochemical cell having an electrolyte containing a solid oxide, a hydrogen electrode, and an oxygen electrode, wherein the device is characterized by having a gas supplying means for supplying a gas containing steam to the hydrogen electrode and the oxygen electrode. Patent Document 2 discloses a steam electrolysis method that generates hydrogen and oxygen by electrolyzing steam using an electrochemical cell consisting of an electrolyte made of a solid oxide electrolyte material as a raw material and a hydrogen electrode and an oxygen electrode disposed by sandwiching the electrolyte, wherein the method is characterized in that the supply gases supplied to the hydrogen electrode and the oxygen electrode both contain steam as a main component, and in that a portion of the exhaust gas that has passed through the hydrogen electrode and the oxygen electrode is circulated to the side upstream of the flow of each supply gas. In addition, Patent Document 3 discloses a steam electrolysis device having, an electrochemical cell consisting of an electrolyte mainly containing a solid oxide, a hydrogen electrode and an oxygen electrode, a steam-supplying part that supplies a gas mainly containing steam to the electrochemical cell, a hydrogen gas-discharging part that discharges hydrogen generated at the hydrogen electrode by the electrolysis of steam, and an oxygen gas-discharging unit that discharges oxygen generated at the oxygen electrode by the electrolysis of steam, wherein the steam electrolysis device is characterized in that the oxygen electrode contains a reduction-resistant material. Furthermore, Patent Document 4 discloses a high-temperature steam electrolysis device, which is characterized by comprising: a high-temperature steam electrolysis cell that comprises a hydrogen electrode chamber, an oxygen electrode chamber, and an oxygen ion conductive solid electrolyte layer disposed between the hydrogen electrode chamber and the oxygen electrode chamber, and that generates hydrogen and oxygen by electrolyzing steam; a hydrogen electrode injector that supplies hydrogen-enriched steam discharged from the high-temperature steam electrolysis cell to the inlet side of the hydrogen electrode chamber of the high-temperature steam electrolysis cell; and an oxygen electrode injector or blower that supplies oxygen-enriched steam discharged from the high-temperature steam electrolysis cell to the inlet side of the oxygen electrode chamber of the high-temperature steam electrolysis cell.

### Prior Art Documents

### Patent Documents

Patent Document 1: JP Patent Publication No. 2007-63619 A

Patent Document 2: JP Patent Publication No. 2007-31784 A
Patent Document 3: JP Patent Publication No. 2008-260971 A
Patent Document 4: JP Patent Publication No. 2009-1878 A

Non-Patent Documents

Non-Patent Document 1: Electrochemistry Handbook, 6th edition, 12.2 Water Electrolysis, p. 433 (2013, Maruzen)

Summary of Invention

Object to be Solved by the Invention

As mentioned above, when compared with other hydrogen production methods, water electrolysis can suppress emission of carbon dioxide by combining it with renewable energy. However, water electrolysis is inferior to other methods in terms of hydrogen production costs. Although there is a wide range of estimates depending on the estimation method, the production cost per 1 $Nm^3$ of hydrogen is estimated to be 60 to 76 JPY when the hydrogen is produced by the steam reforming of natural gas, whereas it is estimated to be 99 to 226 JPY when the hydrogen produced by water electrolysis using renewable energy (H. Matsumoto, et al., Energy Technology Roadmaps of Japan: Future Energy Systems Based on Feasible Technologies Beyond 2030, p. 147, "Hydrogen Production"), and thus, hydrogen production by water electrolysis is expensive. The reason therefor is the electricity cost, which accounts for 61% to 72% of the cost in the above estimation. Therefore, if the energy efficiency of electrolysis can be improved, the hydrogen production cost can be reduced. In this regard, steam electrolysis is still in the research stage, but since there is a possibility that the energy efficiency can be increased, it is expected that steam electrolysis will be applied to large-scale hydrogen production.

Thus, in order to solve such problems of the prior art techniques, the present inventors have conducted studies for the purpose of providing a steam electrolysis device and a steam electrolysis method, which have high energy efficiency.

Means for Solving the Object

Examples of specific aspects of the present invention will be described below.

[1] A steam electrolysis device, comprising an anode electrode chamber, a cathode electrode chamber, and an ion conductor disposed between these electrode chambers, wherein
steam in an amount more than twice the amount of hydrogen generated is supplied to at least one selected from the anode electrode chamber and the cathode electrode chamber, and 50% or less of the supplied steam is electrolyzed.
[2] The steam electrolysis device according to [1], wherein the steam in an amount more than twice the amount of hydrogen generated is supplied to both the anode electrode chamber and the cathode electrode chamber, and 50% or less of the supplied steam is electrolyzed.
[3] The steam electrolysis device according to [1] or [2], wherein steam in an amount 10 times or more the amount of hydrogen generated is supplied to at least one selected from the anode electrode chamber and the cathode electrode chamber.
[4] The steam electrolysis device according to any one of [1] to [3], comprising at least one selected from:

an anode side steam generation part that supplies steam to the anode electrode chamber, and
a cathode side steam generation part that supplies steam to the cathode electrode chamber.

[5] The steam electrolysis device according to any one of [1] to [4], comprising at least one selected from an anode side heat exchange part and a cathode side heat exchange part, wherein

the anode side heat exchange part heats the steam to be supplied to the anode electrode chamber by gas-gas heat exchange, and
the cathode side heat exchange part heats the steam to be supplied to the cathode electrode chamber by gas-gas heat exchange.

[6] The steam electrolysis device according to [5], wherein

the anode side heat exchange part cools at least one selected from oxygen and steam discharged from the anode electrode chamber by gas-gas heat exchange, and

the cathode side heat exchange part cools at least one of hydrogen and steam discharged from the cathode electrode chamber by gas-gas heat exchange.

[7] The steam electrolysis device according to [5] or [6], comprising at least one selected from an anode side steam overheating part and a cathode side steam overheating part, wherein

the anode side steam overheating part further heats the steam that has been heated by the anode side heat exchange part, and supplies steam having a higher temperature than the operating temperature of the electrolysis of the ion conductor to the anode electrode chamber, and
the cathode side steam overheating part further heats the steam that has been heated by the cathode side heat exchange part, and supplies steam having a higher temperature than the operating temperature of the electrolysis of the ion conductor to the cathode electrode chamber.

[8] The steam electrolysis device according to any one of [4] to [7], comprising at least one selected from an anode side concentration part and a cathode side concentration part, wherein

the anode side concentration part recovers at least one selected from hydrogen and oxygen that has been cooled by the anode side heat exchange part, and separates steam cooled by the anode side heat exchange part as liquid water and returns it to the anode side steam generation part, and
the cathode side concentration part recovers at least one selected from hydrogen and oxygen that has been cooled by the cathode side heat exchange part, and separates steam cooled by the cathode side heat exchange part as liquid water and returns it to the cathode side steam generation part.

[9] The steam electrolysis device according to any one of [4] to [8], wherein
geothermal or solar thermal energy is used in the anode side steam generation part and the cathode side steam generation part.
[10] The steam electrolysis device according to any one of [7] to [9], wherein
geothermal or solar thermal energy is used in the anode side steam overheating part and the cathode side steam overheating part.
[11] The steam electrolysis device according to any one of [1] to [10], wherein

the ion conductor is a proton conductor,
the operating temperature of the ion conductor is 300°C to 650°C, and
the steam is supplied to the cathode electrode chamber.

[12] The steam electrolysis device according to any one of [1] to [10],, wherein

the ion conductor is an oxide ion conductor,
the operating temperature of the ion conductor is 700°C or higher, and
the steam is supplied to the anode electrode chamber.

[13] A steam electrolysis method that uses a steam electrolysis device, comprising an anode electrode chamber, a cathode electrode chamber, and an ion conductor disposed between these electrode chambers, wherein
the method comprises supplying steam in an amount more than twice the amount of hydrogen generated to at least one selected from the anode electrode chamber and the cathode electrode chamber, and electrolyzing 50% or less of the supplied steam.
[14] The steam electrolysis method according to [13], wherein the steam in an amount more than twice the amount of hydrogen generated is supplied to both the anode electrode chamber and the cathode electrode chamber, and 50% or less of the supplied steam is electrolyzed.
[15] The steam electrolysis method according to [13] or [14], wherein steam in an amount 10 times or more the amount of hydrogen generated is supplied to at least one selected from the anode electrode chamber and the cathode electrode chamber.

Advantageous Effects of Invention

According to the present invention, a steam electrolysis device and a steam electrolysis method, which have high energy efficiency, can be provided.

Brief Description of Drawings

[Figure 1] Figure 1 is a schematic view explaining the case of supplying steam to each electrode chamber.
[Figure 2] Figure 2 is a schematic view explaining the case of supplying steam to each electrode chamber.
[Figure 3] Figure 3 is a view explaining the breakdown of energy for water electrolysis (25°C) and steam electrolysis (600°C).
[Figure 4] Figure 4 is a view explaining calculation of electrical energy used in conventional steam electrolysis.
[Figure 5] Figure 5 is a view explaining calculation of electrical energy used in steam electrolysis, when the steam electrolysis device of the present embodiment is used.
[Figure 6] Figure 6 is a view explaining calculation of electrical energy used in steam electrolysis, when the steam electrolysis device of the present embodiment is used.
[Figure 7] Figure 7 is a schematic view explaining the configuration of a steam electrolysis cell used in the present embodiment.
[Figure 8] Figure 8 is a graph explaining the electrical conductivity of YSZ (yttria-stabilized zirconia, oxide ion conductor) and $BaCe_{0.9}Y_{0.1}O_{3-\delta}$ (proton conductor).
[Figure 9] Figure 9 is a view explaining calculation of electrical energy used in steam electrolysis, when the steam electrolysis device of the present embodiment is used.
[Figure 10] Figure 10 is the electrical conductivity isotherm of $SrZr_{0.9-x}Ce_xY_{0.1}O_{3-\alpha}$ (x = 0 to 0.9).

Embodiments of Carrying out the Invention

The present invention will be described in detail below. The constitutive elements of the present invention given below may be described based on some typical embodiments or specific examples. However, the present invention should not be limited to such embodiments. In the present description, the numerical range expressed with the wording "a number to another number" means the range that falls between the former number indicating the lower limit value of the range and the latter number indicating the upper limit value thereof.

(Steam electrolysis device)

The present embodiment relates to a steam electrolysis device, comprising an anode electrode chamber, a cathode electrode chamber, and an ion conductor disposed between these electrode chambers, wherein steam in an amount more than twice the amount of hydrogen generated is supplied to at least one selected from the anode electrode chamber and the cathode electrode chamber, and 50% or less of the supplied steam is electrolyzed. It is to be noted that, in the present description, an assembly having an anode electrode chamber, a cathode electrode chamber, and an ion conductor disposed between these electrode chambers is also referred to as a "steam electrolysis cell."

In the present embodiment, steam may be supplied to either the anode electrode chamber or the cathode electrode chamber. In this case, steam for electrolysis (raw material steam) may be supplied to either the anode electrode chamber or the cathode electrode chamber, and an excess amount of steam (steam for dilution) may be supplied to the electrode chamber to which the raw material steam is supplied. Alternatively, steam for electrolysis (raw material steam) may be supplied to either the anode electrode chamber or the cathode electrode chamber, and an excess amount of steam (steam for dilution) may be supplied to the electrode chamber to which the raw material steam is not supplied. It is to be noted that, in the present description, the raw material steam is steam that is actually electrolyzed and is decomposed into hydrogen and oxygen, and that the steam for dilution is steam that is supplied to each electrode chamber but is not used in the actual electrolysis.

As described above, steam may be supplied to either the anode electrode chamber or the cathode electrode chamber, but in the present embodiment, it is particularly preferable to supply steam in an amount more than twice the amount of hydrogen generated to both the anode electrode chamber and the cathode electrode chamber, and to electrolyze 50% or less of the steam supplied.

For example, in a steam electrolysis device in which the ion conductor is a proton conductor, the operating temperature of the ion conductor is 300°C to 650°C, and steam is supplied to the cathode electrode chamber, as shown in Figure 1, at least a portion of the steam (raw material steam) is supplied to the cathode electrode chamber, but the remaining steam (steam for dilution) may be supplied to the cathode electrode chamber, or to the anode electrode chamber, or to the cathode electrode chamber and the anode electrode chamber. On the other hand, in a steam electrolysis device in which the operating temperature of the ion conductor is 700°C or higher and steam is supplied to the anode electrode chamber, as shown in Figure 2, at least a portion of the steam (raw material steam) is supplied to the anode electrode chamber, but the remaining steam (steam for dilution) may be supplied to the anode electrode chamber,

or to the cathode electrode chamber, or to the cathode electrode chamber and the anode electrode chamber.

In the present embodiment, in the entire amount of steam supplied, preferably 50% or less, more preferably 40% or less, further preferably 30% or less, still further preferably 20% or less, and particularly preferably 10% or less of the steam supplied is electrolyzed. Besides, about 1% of the entire amount of steam supplied may be electrolyzed. Thus, in the present embodiment, an excessive amount of steam is supplied to the electrode chambers, and a portion of the steam is electrolyzed, so that the electrical energy used in steam electrolysis can be reduced.

The ratio of electrolysis to the steam supplied to the electrode chamber can be calculated from the speed at which the steam is introduced into the electrode chamber and the current value applied to the electrolysis cell. Therefore, while monitoring the ratio of electrolysis to the introduced steam from the speed at which the steam is introduced into the electrode chamber and the current value applied to the electrolysis cell, the current or voltage applied to the electrolysis cell is adjusted so that this ratio becomes a desired ratio, thereby only a portion of the steam can be electrolyzed, and the ratio of desired electrolysis can be achieved.

In the present embodiment, the amount of steam supplied to at least one selected from the anode electrode chamber and the cathode electrode chamber is preferably more than twice the amount of hydrogen generated, more preferably three times or more, further preferably five times or more, and particularly preferably ten times or more. In addition, the amount of steam supplied to at least one selected from the anode electrode chamber and the cathode electrode chamber may be 50 times or more, or may also be 100 times or more. The upper limit value of the amount of steam supplied to at least one selected from the anode electrode chamber and the cathode electrode chamber is not particularly limited, and for example, it is preferably 100,000 times or less.

Since the present embodiment has the above-described configuration, the energy efficiency of steam electrolysis can be enhanced. Hereafter, the effects exhibited by the present embodiment will be explained. while comparing water electrolysis and steam electrolysis.

The electrolysis reaction of water is represented by the following formula (1).

$$H_2O \rightarrow H_2 + 1/2O_2 \qquad (1)$$

As is found from the fact that oxidation of hydrogen, which is a reverse reaction, occurs spontaneously, decomposition of water does not occur spontaneously. In other words, the Gibbs free energy change is a positive value, and the decomposition of water can proceed by inputting external energy equal to or greater than the Gibbs free energy change.

Herein, the breakdown of energy during water electrolysis and during steam electrolysis is shown in Figure 3. The left side shows the breakdown of energy during water electrolysis (liquid) at 25°C. The Gibbs free energy change when water is decomposed into hydrogen and oxygen is +237.1 kJ/mol. Dividing this by 2F *(F* is the Faraday constant, F = 96485 C/mol) gives 1.23 V, which is the equilibrium electrolysis voltage (hydrogen and oxygen are all at 1 bar). In fact, in order to significantly advance water electrolysis, it is necessary to apply an overvoltage. In the case of water electrolysis, the increase in the overvoltage is particularly large in the region with low current density, and the electrolysis voltage is generally about 1.6 to 2.0 V. On the other hand, in the case of steam electrolysis, the standard Gibbs free energy change at 600°C is +199.7 kJ/mol, and the equilibrium electrolysis voltage is 1.02 V (steam, hydrogen, and oxygen are all at 1 bar). In the case of steam electrolysis, since the operating temperature is high, the overvoltage is small, and electrolysis can proceed even at around 1.2 to 1.3 V.

The electrical energy necessary for water electrolysis/steam electrolysis is proportional to the electrolysis voltage (the energy necessary to produce 1 mol of hydrogen is expressed to be the electrolysis voltage multiplied by 2F). Steam electrolysis has a lower electrolysis voltage than that of water electrolysis, which may reduce the cost of hydrogen production. On the other hand, the enthalpy change during water decomposition at 600°C is +245.0 kJ/mol, and dividing this by 2F gives 1.29 V, which is a thermally neutral voltage. In other words, when steam electrolysis is performed at 1.29 V, the input electrical energy (= 2F $\times$ 1.29 V) is equal to the generated chemical energy ($\Delta H$ = 245.0 kJ/mol), and no heat is transferred in or out. When the electrolysis voltage is below 1.29 V, the input electrical energy falls below the generated chemical energy, and it is necessary to input heat from outside to maintain the temperature. Therefore, if heat of a temperature higher than the operating temperature is available, steam electrolysis can be endothermically carried out, and hydrogen can be produced with less electrical energy.

In the case of steam electrolysis, in addition to the above-described energy required for electrolysis, it is necessary to input latent heat to turn water into steam. Converting this to voltage (dividing the latent heat by 2F) is equivalent to 0.21 V. The heat required to make steam can be a low temperature, and if such waste heat can be utilized, it is possible to save the latent heat.

Here, in the present invention, steam in an amount more than twice the amount of hydrogen generated is supplied to at least one selected from the anode electrode chamber and the cathode electrode chamber, and 50% or less of the supplied steam is electrolyzed. In the present invention, by supplying an excess amount of steam (e.g., steam in an amount more than twice the amount of hydrogen generated) to at least one selected from the anode electrode chamber and the

cathode electrode chamber, the concentration of hydrogen and oxygen generated by the electrolysis can be diluted. Thereby, the electrolysis voltage used in steam electrolysis can be lowered, and the electrical energy used can be further reduced.

The electrolysis voltage of steam electrolysis is represented by the following formula (2):
[Formula 1]

$$V_e = \frac{\Delta G^0}{2F} + \frac{RT}{2F} ln \frac{p(H2,c) \cdot p(O2,a)^{1/2}}{p(H2O,a)} + \eta \quad (2)$$

Ve: Electrolysis voltage
$\Delta G°$: Gibbs energy of formation of water
F: Faraday constant (= 96485 C/mol)
R: Gas constant (= 8.314 J/mol K)
T: Operating temperature
$p$ ($H_2$, c): Partial pressure of hydrogen generated at the cathode
p ($O_2$, a): Partial pressure of oxygen generated at the anode
$p$ ($H_2O$, a): Partial pressure of steam at the anode
$\eta$: Overvoltage

The first term in the formula (2) is +1.02 V at 600°C. In conventional steam electrolysis, almost all amount of the steam supplied is electrolyzed. For example, if 90% of the steam introduced to the anode is utilized, p ($O_2$, a) = 0.82, p ($H_2O$, a) = 0.18, and$p$ ($H_2$, c) = 1 (assuming operation at atmospheric pressure, units are bar), the second term is +0.06 V, and together with the first term, it is 1.02 V. An overvoltage is added to this, and it operates at, for example, about 1.3 V (Figure 4). On the other hand, if considering the case where steam in an amount that is 10 times the amount of hydrogen generated is sent to both electrode chambers, $p$ ($O_2$, a) = 0.053, $p$ ($H_2O$, a) = 0.947, and $p$ ($H_2$, c) = 0.091. In the formula (2), the second term is -0.14V, and when combined with the first term, it becomes 0.89V. In other words, the electrolysis voltage is 13% smaller than the conventional 1.02 V. If assuming the same overvoltage (0.22 V) as in the previous paragraph, the electrolysis voltage during the operation is 1.1 V, which saves 15% electrical energy compared to the conventional 1.3 V (Figure 5).

Also, if considering the case where steam in an amount that is 100 times the amount of hydrogen generated is sent to both electrode chambers, $p$ ($O_2$, a) = 0.0050, $p$ ($H_2O$, a) = 0.995, and $p$ ($H_2$, c) = 0.0099. In the formula (2), the second term is -0.27 V, and when combined with the first term, it becomes 0.75 V. In other words, the electrolysis voltage is 26% smaller than the conventional 1.02 V. If assuming the same overvoltage (0.22 V) as in the previous paragraph, the electrolysis voltage during the operation is 0.97 V, which saves 25% electrical energy compared to the conventional 1.3 V (Figure 6).

(Anode electrode chamber/cathode electrode chamber)

The steam electrolysis device of the present embodiment has a steam electrolysis cell, and in the steam electrolysis cell, an anode and a cathode are established by sandwiching an ion conductor, which will be described later. For example, Figure 7 shows the configuration of a steam electrolysis cell, both when the ion conductor is a proton conductor and when it is an oxide ion conductor. As shown in Figure 7, an anode and a cathode are arranged on either side of the ion conductor, and an anode electrode chamber and a cathode electrode chamber are formed on each side.

As shown in Figure 7(a), for example, when the ion conductor is a proton conductor, steam is supplied to, at least, the anode electrode chamber, and hydrogen generated by the electrolysis of the steam is generated on the cathode side in the form of being separated from the steam. In addition, oxygen generated by the electrolysis of the steam is recovered from the anode electrode chamber. Besides, in this case, at least a portion (raw material steam) of the steam is supplied to the anode electrode chamber, but the remaining steam (steam for dilution) may be supplied to the anode electrode chamber, may be supplied to the cathode electrode chamber, or may also be supplied to the anode electrode chamber and the cathode electrode chamber.

On the other hand, as shown in Figure 7(b), for example, when the ion conductor is an oxide ion conductor, steam is supplied to, at least, the cathode electrode chamber, and the steam is electrochemically divided into hydrogen and oxide ions. The oxide ions are then oxidized, and oxygen is generated from the anode electrode chamber. Besides, in this case, at least a portion (raw material steam) of the steam is supplied to the cathode electrode chamber, but the remaining steam (steam for dilution) may be supplied to the cathode electrode chamber, may be supplied to the anode electrode chamber, or may also be supplied to the cathode electrode chamber and the anode electrode chamber.

Examples of the hydrogen electrode material used in the steam electrolysis device of the present embodiment may include, for example, materials such as Ni-YSZ (nickel-yttria-stabilized zirconia), Ni-SDC (nickel-ceria), Ni-BZCY (nickel-barium zirconium cerium yttrium oxide), and Ni-BZY (nickel-barium zirconium yttrium oxide).

Examples of the oxygen electrode material used in the steam electrolysis device of the present embodiment may include, for example, materials such as LSC (lanthanum strontium cobaltite), LSM (lanthanum strontium manganite), BLC (barium lanthanum cobaltite), SSC (samarium strontium cobaltite), and LSCF (lanthanum strontium cobalt ferrite).

The anode electrode chamber and the cathode electrode chamber are preferably provided with a supply port for supplying steam and a discharge port for discharging hydrogen and/or oxygen generated by the electrolysis of the steam, and excess steam. It is to be noted that the steam recovered from the discharge port may be separated as water, and may be reused by regenerating the steam from the separated water, respectively.

The shape of the steam electrolysis cell is not particularly limited, and may be a flat, cylindrical, one-end closed cylindrical, honeycomb, pleated or corrugated shape, etc. In addition, the steam electrolysis device of the present embodiment may have one steam electrolysis cell, but it may also have multiple steam electrolysis cells.

(Ion conductor)

In the steam electrolysis device of the embodiment, the ion conductor is preferably a solid electrolyte, and is more preferably a solid oxide. Examples of the solid oxide may include: proton conductors including stabilized zirconia-based electrolytes, in which $Y_2O_3$, $Sc_2O_3$, $Nd_2O_3$, $Sm_2O_3$, $Gd_2O_3$, $Yb_2O_3$ or the like is dissolved in $ZrO_2$, ceria-based electrolytes, in which $Sm_2O_3$, $Gd_2O_3$, $Y_2O_3$ or the like is dissolved in $CeO_2$, lanthanum gallate-based electrolytes, in which $LaGaO_3$ as a base material, such as $LaSrGaMgO_3$, with some elements substituted, and electrolytes such as $SrCeO_3$, $BaCeO_3$, $SrZrO_3$, $BaZrO_3$, $(Ba_{1-x}Sr_x)(Zr_{1-y}Ce_y)O_3$ ($0 < x < 1$, $0< y < 1$), or these used as base materials, with some elements substituted; bismuth oxide-based electrolytes, in which $Y_2O_3$, $Nd_2O_5$, $WO_3$, $Gd_2O_3$ or the like is dissolved in $Bi_2O_3$; and pyrochlore oxides such as $La_2Zr_2O_7$, $La_2Zr_2O_7$, $Sm_2Zr_2O_7$, and $Gd_2Zr_2O_7$. Among others, in the present embodiment, the oxide ion conductor or the proton conductor ion conductor is preferably used as an ion conductor, and the proton conductor is particularly preferably used. Besides, the oxide ion conductor may be, for example, a stabilized zirconia-based electrolyte.

< Proton conductor (proton conductive electrolyte) >

In one embodiment, it is preferable to use a proton conductor (proton conductive electrolyte) as an ion conductor.

Conventionally, the electrolyte that has been most typically used for steam electrolysis is the oxide ion conductor YSZ. The electrical conductivity of YSZ is shown in Figure 8, together with that of the typical proton conductor $BaCe_{0.9}Y_{0.1}O_{3-\delta}$. As shown in Figure 8, the electrical conductivity of both conductors is almost the same at 900°C, but it is found that a difference is close to one order of magnitude is generated at 600°C. This is because the activation energy of proton conduction is smaller than that of oxide ion conduction, so the decrease in electrical conductivity due to temperature is small. Therefore, when steam electrolysis is operated at a middle temperature of about 600°C, it becomes advantageous to select the proton conductor in terms of electrical conductivity. By selecting an operating temperature of about 600°C, the cost of the electrolysis device can be reduced from the viewpoint of the heat resistance of the materials that constitute the electrolysis device. In addition, as mentioned above, also in a case where the use of a heat that is higher than the operating temperature is considered, it is necessary to reduce the operating temperature. Accordingly, it is preferable to select the proton conductor as an ion conductor.

The proton conductor is preferably a proton conductive oxide. The proton conductive oxide is an ion-conducting solid that uses protons (hydrogen ions, $H^+$) as conductive species (T. Takahshi, H. Iwahara, Revue de Chimie minerale, 17, 243-253 (1980) and H. Iwahara, T. Esaka, H. Uchida, N. Maeda, Solid State Ionics, 3-4, 359-363 (1981)). At a high temperature from about 600°C to 900°C, metal oxides contain hydrogen in the lattice, and the protons (hydrogen ions, $H^+$) that are the ions of the hydrogen cause electrical conductivity. Typical chemical compositions are $SrCe_{0.95}Yb_{0.05}O_{3-\delta}$, $BaZr_{0.9}Y_{0.1}O_{3-\delta}$, and the like. Most are oxides ($ABO_3$) having a perovskite structure. Typically, the *A* site contains a divalent alkaline earth metal, and the B site contains a tetravalent Ce or Zr. By replacing some of the constituent cations with cations of lower valence, oxygen vacancies are generated under electrically neutral conditions. When water molecules in the atmosphere enter these oxygen vacancies, protons are generated according to the defect equilibrium shown below.

[Formula 2]

$$V_O^{\bullet\bullet} + H_2O \rightleftharpoons O_O^{\times} + 2H_i^{\bullet} \quad (3)$$

In the formula (3), $V^{**}_0$, $O^{\times}o$, and $H^*_i$ are the oxygen vacancies, lattice oxygen and protons, respectively, in the Kröger-Vink notation. In the lattice, protons exist in a state of binding to the lattice oxygen via hydrogen bond, and move

between the lattice oxygens by a hopping mechanism, thereby resulting in proton conduction.

Protons, which are the conductive species, are generated when water molecules in the atmosphere enter oxygen vacancies. Therefore, in order for the proton conductor to work, it is preferable that steam is contained in the reactive.

(Steam generation part)

The steam electrolysis device of the present embodiment may comprise at least one selected from an anode side steam generation part that supplies steam to the anode electrode chamber, and a cathode side steam generation part that supplies steam to the cathode electrode chamber. In the present embodiment, only one steam generation part may be provided, or two steam generation parts may be provided. It is to be noted that when the steam electrolysis device includes a plurality of the above-described steam electrolysis cells, three or more steam generation parts may be provided.

In one embodiment, the anode side steam generation part and the cathode side steam generation part may each be a boiler. In this boiler, steam is generated from liquid water. Besides, the boiler is preferably a steam supply mechanism that generates steam by receiving liquid water and a predetermined amount of heat supplied from the outside.

In one embodiment, the anode side steam generation part and the cathode side steam generation part are preferably steam supply mechanisms, in which steam is obtained by using geothermal or solar thermal energy. That is to say, geothermal or solar thermal energy may be used as thermal energy used in the anode side steam generation part and the cathode side steam generation part. For example, in Figure 9, the geothermal or solar thermal energy is indicated by a thick arrow. As shown in Figure 9, by supplying geothermal or solar thermal energy to the anode side steam generation part and/or the cathode side steam generation part, steam can be generated by geothermal heat or solar heat. Thus, in the present embodiment, the thermal energy for generating the steam used in steam electrolysis can be replaced by geothermal or solar thermal energy, and the use amount of thermal energy derived from fossil fuels can be reduced.

(Heat exchange part)

The steam electrolysis device of the present embodiment may comprise at least one selected from an anode side heat exchange part and a cathode side heat exchange part. The anode side heat exchange part heats the steam to be supplied to the anode electrode chamber by gas-gas heat exchange, and the cathode side heat exchange part heats the steam to be supplied to the cathode electrode chamber by gas-gas heat exchange. In the present embodiment, only one heat exchange part may be provided, or two heat exchange parts may be provided. It is to be noted that when the steam electrolysis device includes a plurality of the above-described steam electrolysis cells, three or more heat exchange parts may be provided.

The heat exchange part may comprise a mechanism for cooling the steam, in addition to a mechanism for heating the steam. Specifically, the anode side heat exchange part may comprise a mechanism for cooling at least one selected from oxygen and steam discharged from the anode electrode chamber by gas-gas heat exchange, and the cathode side heat exchange part may comprise a mechanism for cooling at least one selected from oxygen and steam discharged from the cathode electrode chamber by gas-gas heat exchange.

(Steam overheating part)

The steam electrolysis device of the present embodiment may comprise at least one selected from an anode side steam overheating part and a cathode side steam overheating part. The anode side steam overheating part further heats the steam that has been heated by the anode side heat exchange part, and supplies steam having a higher temperature than the operating temperature of the electrolysis of the ion conductor to the anode electrode chamber, and the cathode side steam overheating part further heats the steam that has been heated by the cathode side heat exchange part, and supplies steam having a higher temperature than the operating temperature of the electrolysis of the ion conductor to the cathode electrode chamber. Thereby, in the steam electrolysis cell, it becomes possible to perform electrolysis by an endothermic reaction while maintaining the operating temperature of the ion conductor, and to reduce electrical energy more effectively. In the present embodiment, only one steam overheating part may be provided, or two steam overheating parts may be provided. It is to be noted that when the steam electrolysis device includes a plurality of the above-described steam electrolysis cells, three or more steam overheating parts may be provided.

Specifically, in the anode side steam overheating part and the cathode side steam overheating part, it is preferable to heat the steam to 300°C or higher, it is more preferable to heat the steam to 400°C or higher, and it is further preferable to heat the steam to 500°C or higher. It is to be noted that the upper limit of the heating temperature of the steam is not particularly limited, but is limited to about 2000°C.

As shown in Figure 9, geothermal or solar thermal energy may be used as thermal energy in the anode side steam overheating part and the cathode side steam overheating part (dotted arrow). As shown in Figure 9, the steam may

be overheated by geothermal heat or solar heat as a result of supplying the geothermal or solar thermal energy to the anode side steam overheating part and/or cathode side steam overheating part. Thus, in the present embodiment, the thermal energy for overheating the steam used in steam electrolysis can be replaced with geothermal or solar thermal energy, and the use amount of thermal energy derived from fossil fuels can be reduced.

(Concentration part)

The steam electrolysis device of the present embodiment may comprise at least one selected from an anode side concentration part and a cathode side concentration part. The anode side concentration part recovers at least one selected from hydrogen and oxygen that has been cooled by the anode side heat exchange part, and separates steam cooled by the anode side heat exchange part as liquid water and returns it to the anode side steam generation part, and the cathode side concentration part recovers at least one selected from hydrogen and oxygen that has been cooled by the cathode side heat exchange part, and separates steam cooled by the anode side heat exchange part as liquid water and returns it to the anode side steam generation part. Thus, the steam recovered after the electrolysis of the steam can be reused by turning it into liquid water in the concentration part and then turning it into steam again. It is to be noted that a part of the steam recovered in the concentration part may be dissipated, and a part of the water obtained in the concentration section may be discharged.

(Steam electrolysis method)

The present embodiment relates to a steam electrolysis method that uses the above-mentioned steam electrolysis device, wherein the method comprises supplying steam in an amount more than twice the amount of hydrogen generated to at least one selected from an anode electrode chamber and a cathode electrode chamber, and electrolyzing 50% or less of the supplied steam. In this case, it is more preferable to supply steam in an amount more than twice the amount of hydrogen generated to both the anode electrode chamber and the cathode electrode chamber, and to electrolyze 50% or less of the steam supplied.

In the steam electrolysis method of the present embodiment, in the entire amount of steam supplied, preferably 50% or less, more preferably 40% or less, further preferably 30% or less, still further preferably 20% or less, and particularly preferably 10% or less of the steam supplied is electrolyzed. Besides, about 1% of the entire amount of steam supplied may be electrolyzed.

In the steam electrolysis method of the present embodiment, the amount of steam supplied to at least one selected from the anode electrode chamber and the cathode electrode chamber is preferably more than twice the amount of hydrogen generated, more preferably three times or more, further preferably five times or more, and particularly preferably ten times or more. In addition, the amount of steam supplied to at least one selected from the anode electrode chamber and the cathode electrode chamber may be 50 times or more, or may also be 100 times or more. Besides, the upper limit value of the amount of steam supplied to at least one selected from the anode electrode chamber and the cathode electrode chamber is not particularly limited, and for example, it is preferably 100,000 times or less.

The steam electrolysis method of the present embodiment may further comprise a step of heating the steam to be supplied to the anode side electrode chamber and/or the cathode side electrode chamber. Furthermore, the steam electrolysis method of the present embodiment may further comprise a step of overheating the steam to be supplied to the anode side electrode chamber and/or the cathode side electrode chamber. In the step of overheating the steam, it is preferable to heat the steam to 300°C or higher, it is more preferable to heat the steam to 400°C or higher, and it is further preferable to heat the steam to 500°C or higher. It is to be noted that the upper limit of the heating temperature of the steam is not particularly limited, but is limited to about 2000°C.

In the steam electrolysis method of the present embodiment, geothermal or solar thermal energy may be used in the step of generating steam from water, the step of heating the steam, and the step of overheating the steam. In the steam electrolysis method of the present embodiment, by using such geothermal or solar thermal energy, the use amount of thermal energy derived from fossil fuels can be reduced.

The steam electrolysis method of the present embodiment may further have a step of cooling at least one selected from hydrogen, oxygen and steam discharged from the anode side electrode chamber and/or the cathode side electrode chamber by gas-gas heat exchange, and recovering liquid water. The thus obtained liquid water can be reused, and it can be used as steam in electrolysis again. Thus, in the steam electrolysis method of the present embodiment, steam may be circulated in the device and may be utilized repeatedly.

(Intended use)

Steam electrolysis is a method that can achieve the lowest electrolysis voltage among the water electrolysis methods, and by adopting the above-mentioned embodiments, as appropriate, it is possible to conceive an operating

temperature of 600°C or lower. If an electrolysis voltage of about 1.4 to 1.3 V can be achieved at a current density of about 0.5 A/$cm^2$, the steam electrolysis will become a promising hydrogen production method.

## Claims

1. A steam electrolysis device, comprising an anode electrode chamber, a cathode electrode chamber, and an ion conductor disposed between these electrode chambers, wherein
steam in an amount more than twice the amount of hydrogen generated is supplied to at least one selected from the anode electrode chamber and the cathode electrode chamber, and 50% or less of the supplied steam is electrolyzed.

2. The steam electrolysis device according to claim 1, wherein the steam in an amount more than twice the amount of hydrogen generated is supplied to both the anode electrode chamber and the cathode electrode chamber, and 50% or less of the supplied steam is electrolyzed.

3. The steam electrolysis device according to claim 1, wherein steam in an amount 10 times or more the amount of hydrogen generated is supplied to at least one selected from the anode electrode chamber and the cathode electrode chamber.

4. The steam electrolysis device according to claim 1, comprising at least one selected from:

   an anode side steam generation part that supplies steam to the anode electrode chamber, and
   a cathode side steam generation part that supplies steam to the cathode electrode chamber.

5. The steam electrolysis device according to claim 1, comprising at least one selected from an anode side heat exchange part and a cathode side heat exchange part, wherein

   the anode side heat exchange part heats the steam to be supplied to the anode electrode chamber by gas-gas heat exchange, and
   the cathode side heat exchange part heats the steam to be supplied to the cathode electrode chamber by gas-gas heat exchange.

6. The steam electrolysis device according to claim 5, wherein

   the anode side heat exchange part cools at least one selected from oxygen and steam discharged from the anode electrode chamber by gas-gas heat exchange, and
   the cathode side heat exchange part cools at least one of hydrogen and steam discharged from the cathode electrode chamber by gas-gas heat exchange.

7. The steam electrolysis device according to claim 5, comprising at least one selected from an anode side steam overheating part and a cathode side steam overheating part, wherein

   the anode side steam overheating part further heats the steam that has been heated by the anode side heat exchange part, and supplies steam having a higher temperature than the operating temperature of the electrolysis of the ion conductor to the anode electrode chamber, and
   the cathode side steam overheating part further heats the steam that has been heated by the cathode side heat exchange part, and supplies steam having a higher temperature than the operating temperature of the electrolysis of the ion conductor to the cathode electrode chamber.

8. The steam electrolysis device according to claim 4, comprising at least one selected from an anode side concentration part and a cathode side concentration part, wherein

   the anode side concentration part recovers at least one selected from hydrogen and oxygen that has been cooled by the anode side heat exchange part, and separates steam cooled by the anode side heat exchange part as liquid water and returns it to the anode side steam generation part, and
   the cathode side concentration part recovers at least one selected from hydrogen and oxygen that has been cooled by the cathode side heat exchange part, and separates steam cooled by the cathode side heat exchange part as liquid water and returns it to the cathode side steam generation part.

**9.** The steam electrolysis device according to claim 4, wherein
geothermal or solar thermal energy is used in the anode side steam generation part and the cathode side steam generation part.

**10.** The steam electrolysis device according to claim 7, wherein
geothermal or solar thermal energy is used in the anode side steam overheating part and the cathode side steam overheating part.

**11.** The steam electrolysis device according to claim 1, wherein

the ion conductor is a proton conductor,
the operating temperature of the ion conductor is 300°C to 650°C, and
the steam is supplied to the cathode electrode chamber.

**12.** The steam electrolysis device according to claim 1, wherein

the ion conductor is an oxide ion conductor,
the operating temperature of the ion conductor is 700°C or higher, and
the steam is supplied to the anode electrode chamber.

**13.** A steam electrolysis method that uses a steam electrolysis device, comprising an anode electrode chamber, a cathode electrode chamber, and an ion conductor disposed between these electrode chambers, wherein
the method comprises supplying steam in an amount more than twice the amount of hydrogen generated to at least one selected from the anode electrode chamber and the cathode electrode chamber, and electrolyzing 50% or less of the supplied steam.

**14.** The steam electrolysis method according to claim 13, wherein the steam in an amount more than twice the amount of hydrogen generated is supplied to both the anode electrode chamber and the cathode electrode chamber, and 50% or less of the supplied steam is electrolyzed.

**15.** The steam electrolysis method according to claim 13, wherein steam in an amount 10 times or more the amount of hydrogen generated is supplied to at least one selected from the anode electrode chamber and the cathode electrode chamber.

[Figure 1]

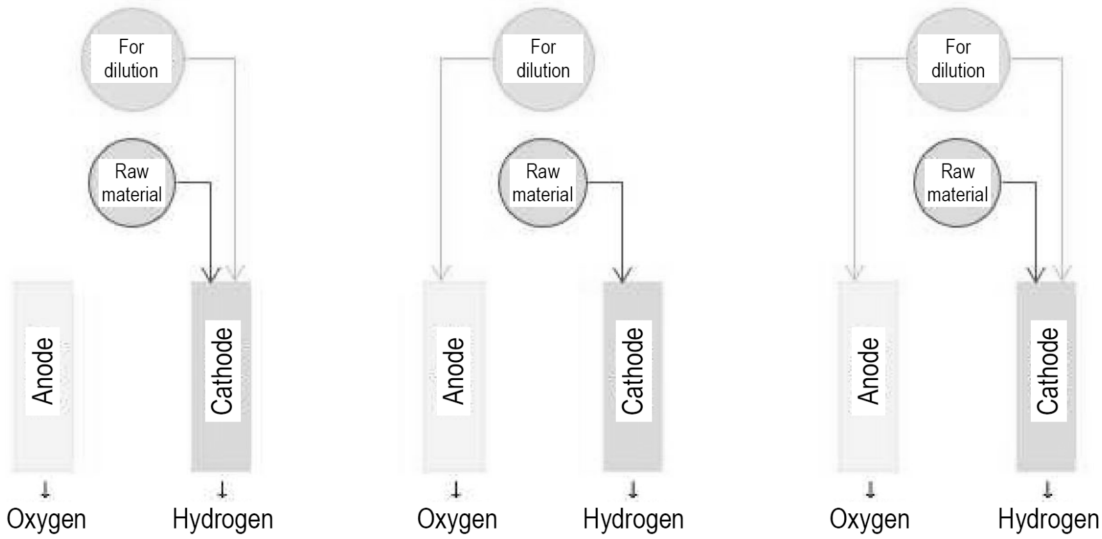


[Figure 2]

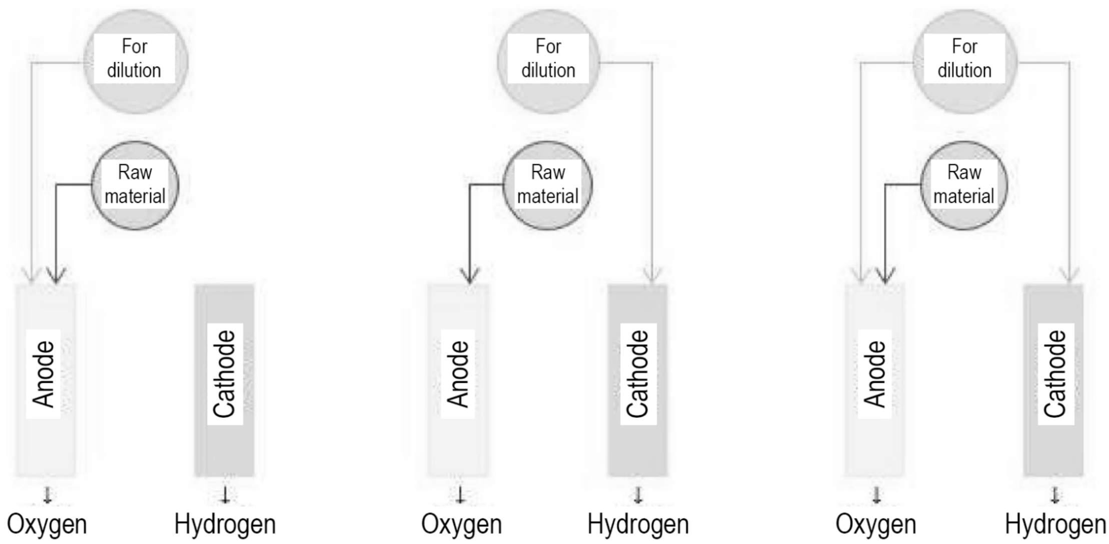

[Figure 3]

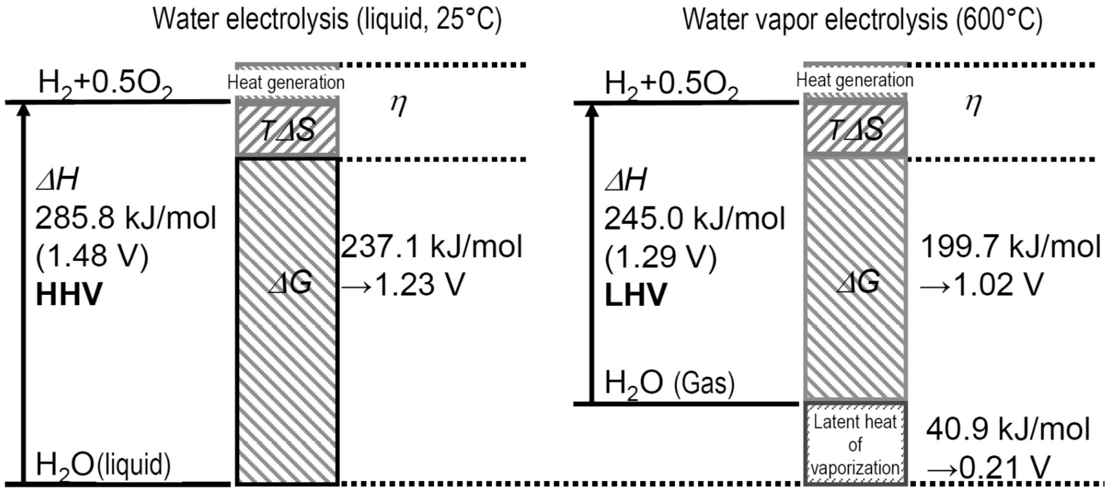


[Figure 4]

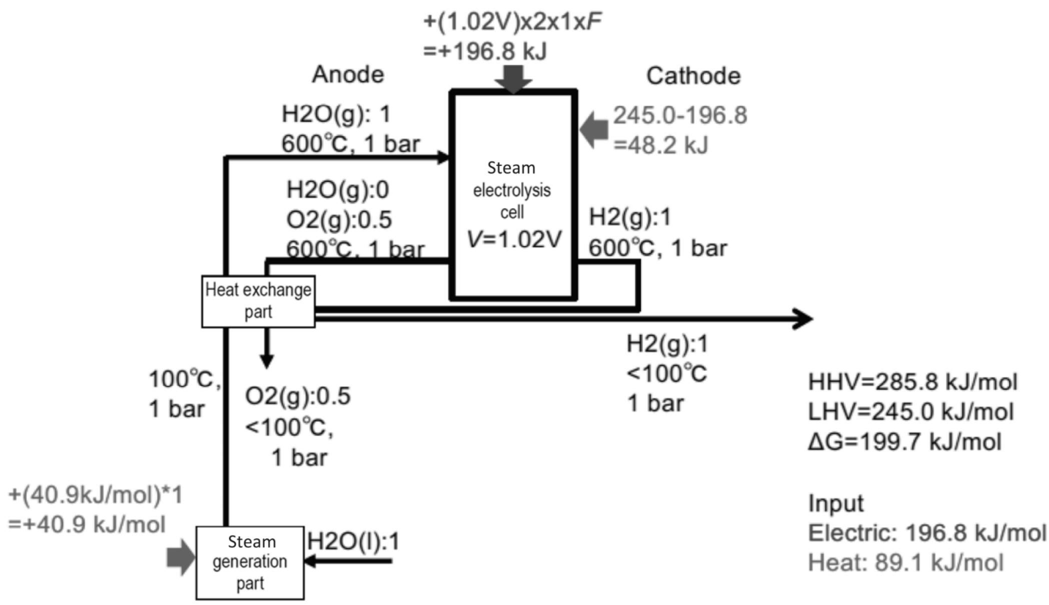

[Figure 5]

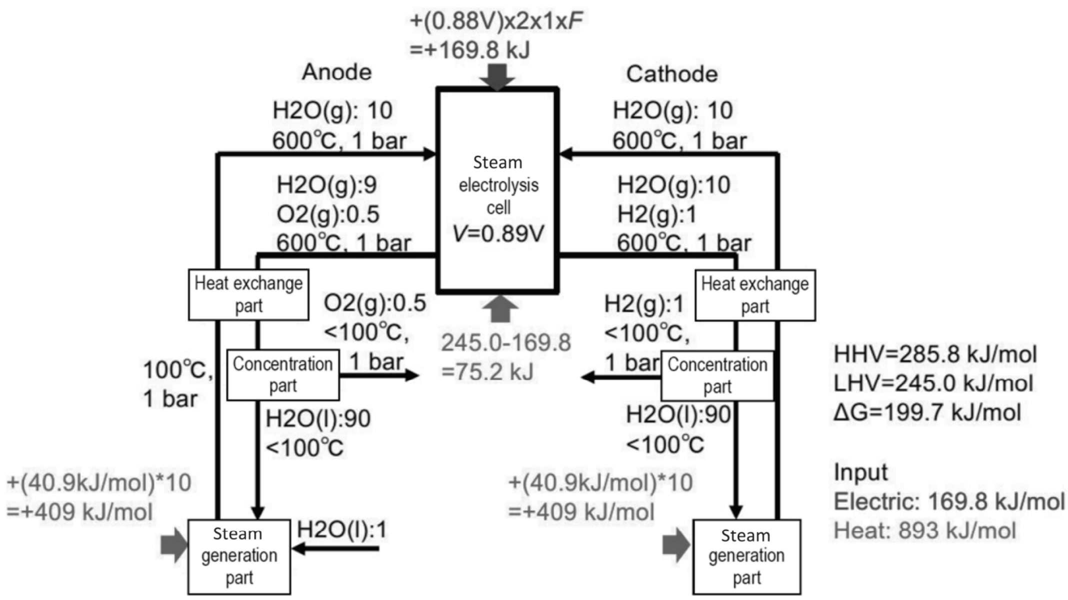


[Figure 6]

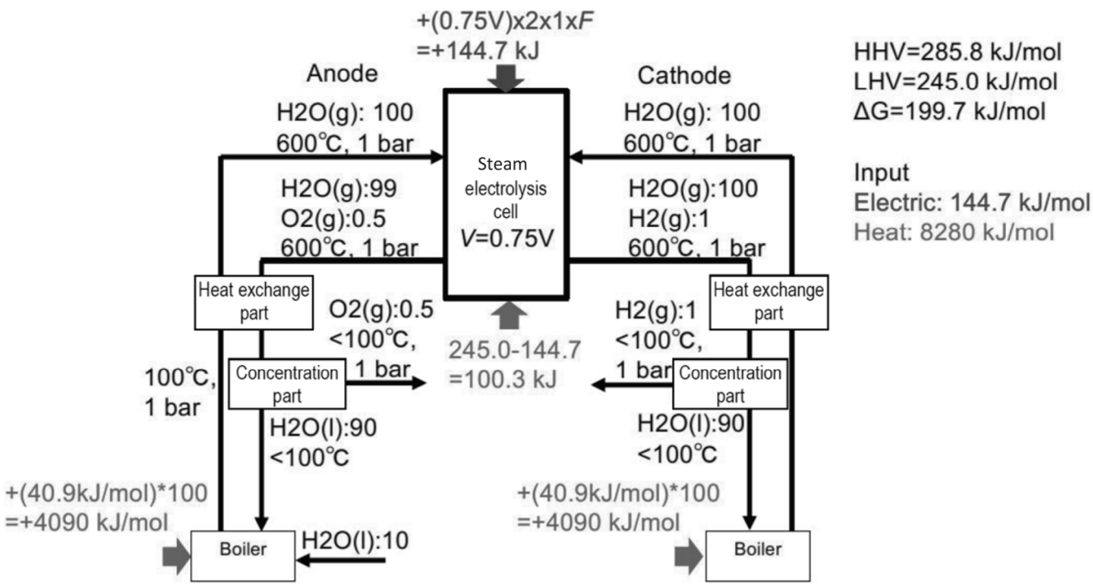

[Figure 7]

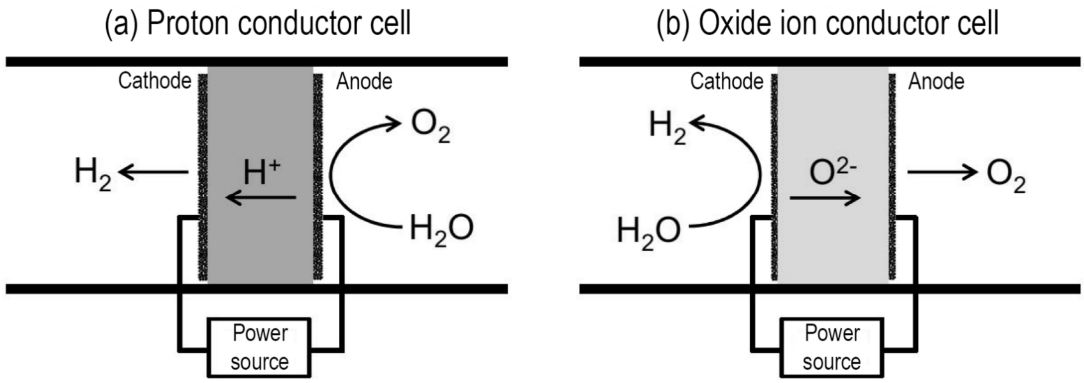


[Figure 8]

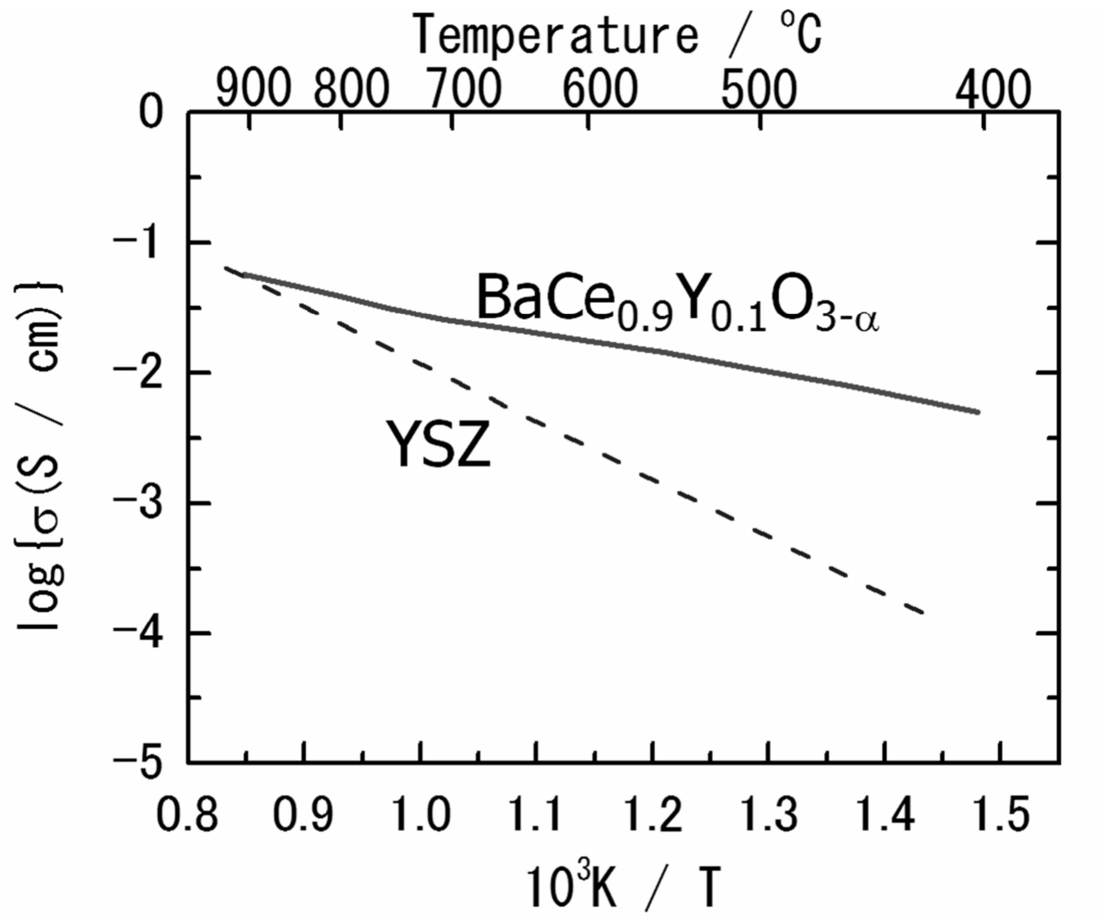

[Figure 9]

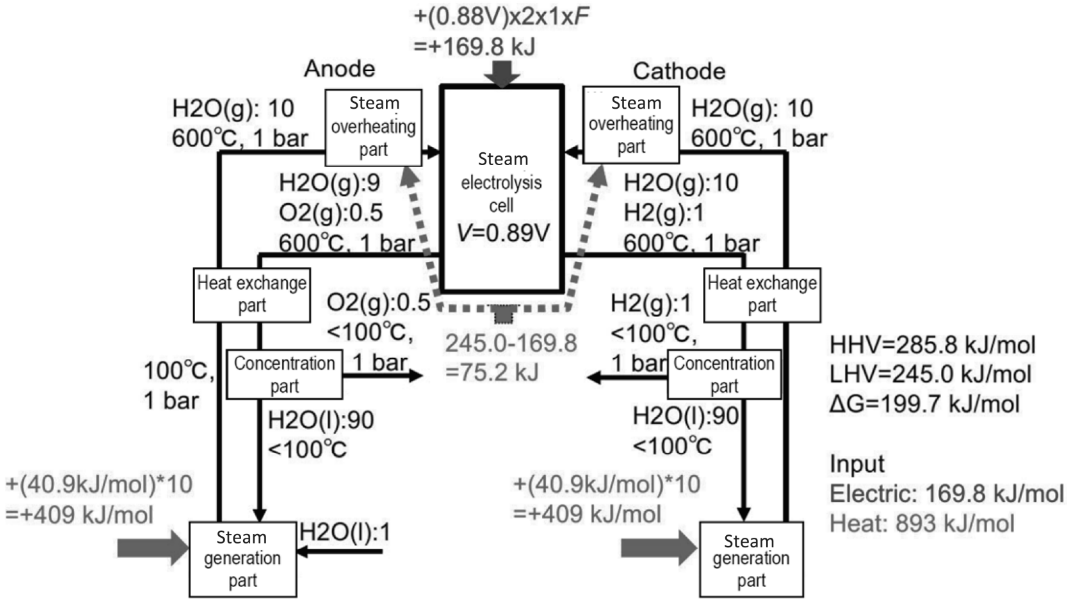


[Figure 10]

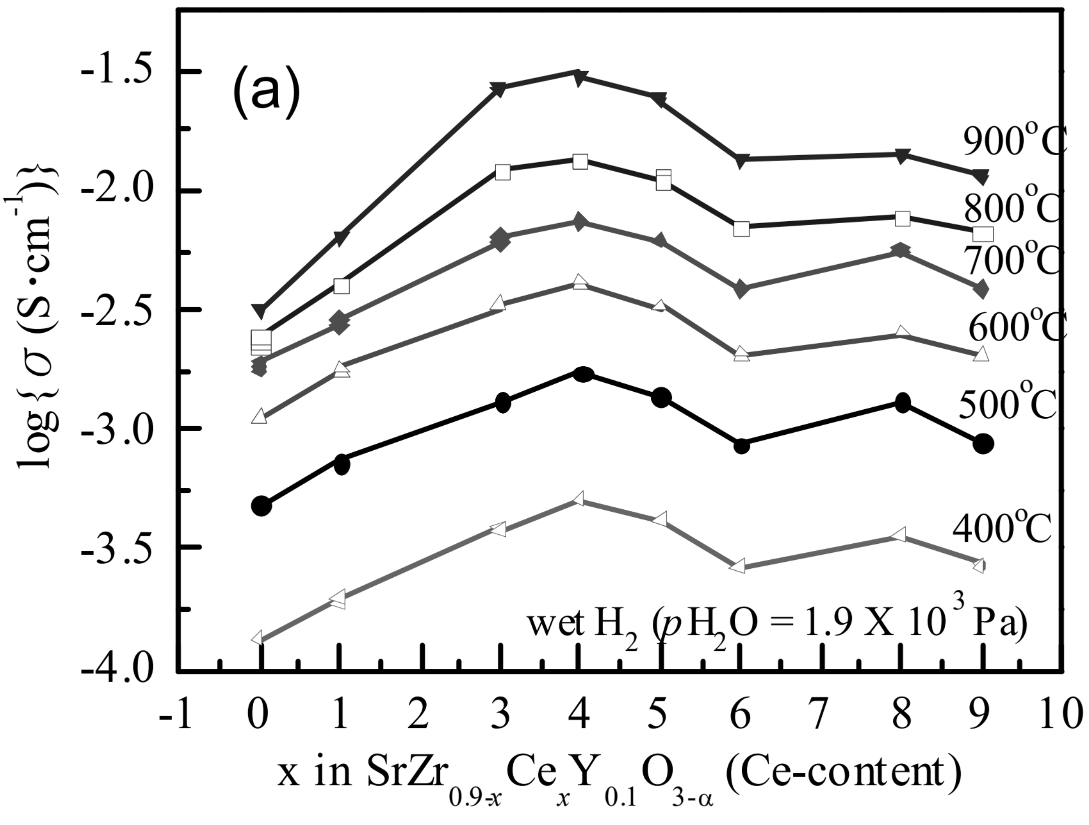

# INTERNATIONAL SEARCH REPORT

International application No.
**PCT/JP2024/012768**

## A. CLASSIFICATION OF SUBJECT MATTER

***C25B 9/00***(2021.01)i; ***C25B 1/042***(2021.01)i; ***C25B 9/60***(2021.01)i; ***C25B 13/04***(2021.01)i; ***C25B 13/07***(2021.01)i; ***C25B 15/08***(2006.01)i; ***C25B 15/021***(2021.01)i
FI: C25B9/00 A; C25B1/042; C25B15/08 302; C25B9/60; C25B13/04 301; C25B13/07; C25B15/021

According to International Patent Classification (IPC) or to both national classification and IPC

## B. FIELDS SEARCHED

Minimum documentation searched (classification system followed by classification symbols)

C25B9/00; C25B1/042; C25B9/60; C25B13/04; C25B13/07; C25B15/08; C25B15/021

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 2018-517233 A (SUNFIRE GMBH) 28 June 2018 (2018-06-28) entire text, all drawings | 1-15 |
| A | JP 2016-98387 A (KABUSHIKI KAISHA TOSHIBA) 30 May 2016 (2016-05-30) entire text, all drawings | 1-15 |
| A | JP 2010-90425 A (KABUSHIKI KAISHA TOSHIBA) 22 April 2010 (2010-04-22) entire text, all drawings | 1-15 |
| A | JP 2015-505344 A (COMMISSARIAT A L'ENERGIE ATOMIQUE ET AUX ENERGIES ALTERNATIVES) 19 February 2015 (2015-02-19) entire text, all drawings | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/012768**

**C. DOCUMENTS CONSIDERED TO BE RELEVANT**

| Category* | Citation of document, with indication, where appropriate, of the relevant passages | Relevant to claim No. |
|---|---|---|
| A | 李坤朋 他, プロトン伝導体/酸化物イオン伝導体形水蒸気電解による水素製造システムの効率検討, 燃料電池, (The Journal of Fuel Cell Technology), 2020, vol. 20(1), pages 76-83, https://www.fcdic.jp/pdf/toukouronbun/toukou32.pdf, (LI, Kunpeng et al., Efficiency Evaluation of Hydrogen Production Systems with Proton/Oxide-ion Conducting Solid Oxide Electrolysis Cells by Calculation) entire text, all drawings | 1-15 |
| E, A | JP 7462020 B1 (MITSUBISHI HEAVY INDUSTRIES, LTD.) 04 April 2024 (2024-04-04) entire text, all drawings | 1-15 |

Form PCT/ISA/210 (second sheet) (July 2022)

**INTERNATIONAL SEARCH REPORT**
**Information on patent family members**

International application No.
**PCT/JP2024/012768**

| Patent document cited in search report | Publication date (day/month/year) | Patent family member(s) | Publication date (day/month/year) |
|---|---|---|---|
| JP 2018-517233 A | 28 June 2018 | US 2018/0287179 A1 | |
| | | WO 2016/161999 A1 | |
| | | EP 3281245 A1 | |
| | | CN 107431219 A | |
| JP 2016-98387 A | 30 May 2016 | (Family: none) | |
| JP 2010-90425 A | 22 April 2010 | (Family: none) | |
| JP 2015-505344 A | 19 February 2015 | US 2015/0004510 A1 | |
| | | WO 2013/104667 A1 | |
| | | EP 2802685 A1 | |
| | | FR 2985522 A1 | |
| | | KR 10-2014-0114021 A | |
| | | DK 2802685 T | |
| | | BR 112014017065 A | |
| JP 7462020 B1 | 04 April 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007063619 A
- JP 2007031784 A
- JP 2008260971 A
- JP 2009001878 A

### Non-patent literature cited in the description


- Electrochemistry Handbook. Water Electrolysis. 2013, 433
- **T. TAKAHSHI** ; **H. IWAHARA**. *Revue de Chimie minerale*, 1980, vol. 17, 243-253
- **H. IWAHARA** ; **T. ESAKA** ; **H. UCHIDA** ; **N. MAEDA**. *Solid State Ionics*, 1981, vol. 3-4, 359-363